# FASCICULE DE BREVET EUROPEEN

(11) **EP 2 632 114 B1**
(45) Date de publication et mention de la délivrance du brevet: **11.10.2017**
(21) Numéro de dépôt: 12305228.4
(22) Date de dépôt: 27.02.2012
(51) Int. Cl.: H04L 29/08, H04W 4/02, H04W 4/00, H04W 4/04, G06F 17/30

(54) **Déclenchement d'une application logicielle par utilisation d'une representation cartographique**
Auslösung einer Software-Anwendung durch Verwendung einer kartografischen Darstellung
Activation of a software application by using a cartographic representation

(43) Date de publication de la demande: 28.08.2013
(73) Titulaire: ALCATEL LUCENT, 92100 Boulogne-Billancourt (FR)
(72) Inventeur: Pastor, Alain, 91620 NOZAY (FR)
(74) Mandataire: Berthier, Karine

(56) Documents cités:
- US-A1- 2005 048 987
- US-A1- 2010 302 143
- FRANK C ET AL: "The sensor internet at work: Locating everyday items using mobile phones", PERVASIVE AND MOBILE COMPUTING, ELSEVIER, NL, vol. 4, no. 3, 1 juin 2008 (2008-06-01), pages 421-447, XP022672760, ISSN: 1574-1192, DOI: 10.1016/J.PMCJ.2007.12.002 [extrait le 2007-12-31]
- DOMINIQUE GUINARD ET AL: "Discovery and On-demand Provisioning of Real-World Web Services", WEB SERVICES, 2009. ICWS 2009. IEEE INTERNATIONAL CONFERENCE ON, IEEE, PISCATAWAY, NJ, USA, 6 juillet 2009 (2009-07-06), pages 583-590, XP031497865, ISBN: 978-0-7695-3709-2
- DONGXIANG ZHANG ET AL: "Locating mapped resources in Web 2.0", DATA ENGINEERING (ICDE), 2010 IEEE 26TH INTERNATIONAL CONFERENCE ON, IEEE, PISCATAWAY, NJ, USA, 1 mars 2010 (2010-03-01), pages 521-532, XP031657911, ISBN: 978-1-4244-5445-7
- MICHEL S ET AL: "Environmental Monitoring 2.0", DATA ENGINEERING, 2009. ICDE '09. IEEE 25TH INTERNATIONAL CONFERENCE ON, IEEE, PISCATAWAY, NJ, USA, 29 mars 2009 (2009-03-29), pages 1507-1510, XP031447863, ISBN: 978-1-4244-3422-0
- ATZORI L ET AL: "The Internet of Things: A survey", COMPUTER NETWORKS, ELSEVIER SCIENCE PUBLISHERS B.V., AMSTERDAM, NL, vol. 54, no. 15, 28 octobre 2010 (2010-10-28), pages 2787-2805, XP027289940, ISSN: 1389-1286 [extrait le 2010-06-01]

## Description

La présente invention est relative au déclenchement d'une application logicielle utilisant au moins un objet physique et accessible depuis un terminal mobile connecté à un réseau de communication.

L'invention est relative à l'internet des objets ou plus précisément au Web des objets (en anglais « Web Of Things »), qui consiste à transformer les objets physiques de la vie réelle en ressources disponibles via le Web, et pouvant éventuellement communiquer entre eux par son truchement : lampes, télévisions, terminaux de communication, panneaux publicitaires, signaux de circulation sur la voirie, appareils électroménager, etc. peuvent s'interfacer avec l'Internet et les applications logicielles disponibles via celui-ci et permettre ainsi de nouvelles possibilités.

Ces concepts et nouvelles possibilités sont par exemple exposés sur le site www.webofthings.com et dans l'article « Towards de Web of Things: Web Mashups for Embedded Devices » de Dominique Guinard et Vlad Trifa, paru dans Proceedings of International WWW (World Wide Web) Conférences, Madrid, 2009.

L'utilisateur d'un terminal mobile de communication peut alors utiliser une application logicielle tirant profit des possibilités (ou services) offerts par les objets physiques environnants.

Certaines applications logicielles peuvent donc n'être déclenchées qu'en présence de certains objets physiques - ou plus précisément d'objets physiques présentant une fonctionnalité nécessaire à l'application logicielle. Par exemple, une application logicielle consistante à visualiser un film doit nécessairement s'interfacer avec un objet physique présentant un écran et éventuellement les bons Codec pour afficher le film.

Il est connu du document US2010/302143 un procédé de contrôle d'objets simulés associés à une localisation physique. Il est connu du document US2005/048987 un dispositif de localisation de dispositifs dans un réseau sans fil. Le document « The sensor internet at work : Locating everyday items using mobile phones » de Christian Franck, Philipp Bolliger, Friedemann Mattern et Wolfgang Kellerer paru dans Pervasive and Mobile Computing volume 4, ELSEVIER, le 1er juin 2008, décrit un système pour surveiller et localiser un objet du quotidien utilisant un téléphone mobile. Il est également connu du document« Discovery and On-demand Provsioning of Real-World Web Services » de Dominique Guinard, Vald Trifa, Patrik Spiess, Bettina Dober et Stamatis Kamouskos publié à la conférence IEEE INTERNATIONAL Web Services, 2009, PISCATAWAY, USA, le 6 juillet 2009, un procédé de découverte dynamique, d'utilisation et de création de services dans des applications composites.

Néanmoins, la majeure partie des développements sur le web des objets se focalisent sur le lien entre les objets physiques et les applications logicielles, mais ne considèrent pas vraiment la problématique engendrée par la mobilité des utilisateurs : ceux-ci peuvent se déplacer et l'environnement change avec ce déplacement, de même que les objets physiques disponibles.

Le document US2010/0302143 divulgue des systèmes et des méthodes pour contrôler un objet simulé en relation avec une position physique dans le monde réel. La méthode peut être mise en oeuvre lorsque des critères notamment liés à la position, associés à l'objet simulé, sont satisfaits. Dans ce cas, la méthode autorise un utilisateur via un dispositif à accéder à l'objet simulé à travers un environnement de simulation. L'objet simulé est une représentation numérique d'un objet éventuel physique et non un objet physique lui-même.

Ainsi, il n'existe notamment pas de moyens simples pour l'utilisateur pour gérer correctement le lien entre les applications logicielles disponibles des objets physiques disponibles dans un environnement donné. Par exemple, il n'est pas possible de programmer à l'avance le déclenchement d'une application logicielle donnée lorsque l'utilisateur atteint une zone géographique en utilisant et/ou en fonction des objets physiques s'y trouvant.

Le but de l'invention est de pallier ce manque. Elle est définie par un procédé selon la revendication 1, un terminal de communication selon la revendication 9, et un programme d'ordinateur selon la revendication 10. Pour ce faire, l'invention propose un procédé pour déclencher une application logicielle accessible depuis un terminal mobile connecté à un réseau de communication et utilisant au moins un objet physique. Ce procédé comporte :
- une étape de sélection d'une application (logicielle) parmi un ensemble d'applications (logicielles) disponibles
- une étape de délimitation d'au moins une zone géographique sur une représentation cartographique, par l'utilisateur du terminal mobile,
- une étape de détermination automatique d'un ensemble d'objets physiques actifs situés dans l'au moins une zone géographique et disposant d'une interface avec le réseau de communication,
- une étape d'interfaçage de l'application avec un sous-ensemble d'objets physiques parmi l'ensemble d'objets physiques.

Selon des modes de réalisation de l'invention, ce sous-ensemble peut être déterminé dynamiquement à partir de l'ensemble d'objets physiques actifs préalablement déterminé et de la localisation géographique du terminal mobile.

L'au moins une zone peut être formée de deux zones géographiques disjointes et l'application peut alors déployer une même session applicative dans les deux zones géographiques.

L'au moins une zone géographique peut comprendre un trajet.

La détermination automatique d'un ensemble d'objets physiques peut être effectuée dynamiquement en même temps que la délimitation d'au moins une zone géographique.

L'invention a pour autre objet un terminal de communication disposant d'une interface homme-machine comportant
- un écran permettant l'affichage d'une représentation cartographique,
- de premiers moyens de commandes pour la sélection d'une application parmi un ensemble d'applications disponibles, et
- de seconds moyens de commande pour délimiter au moins une zone géographique sur cette représentation cartographique.

Le terminal comporte en outre des moyens de traitement
- pour déterminer automatiquement un ensemble d'objets physiques actifs situés dans l'au moins une zone géographique et disposant d'une interface avec un réseau de communication, et
- pour interfacer cette application avec un sous-ensemble d'objets physiques parmi l'ensemble préalablement déterminé.

L'invention a également pour objet un programme d'ordinateur disposant de moyens de code prévus pour mettre en oeuvre le procédé précédemment décrit lorsqu'il est déployé sur un terminal de communication.

Ainsi, l'utilisateur peut programmer à l'avance le déclenchement d'une application logicielle sur une zone géographique qu'il peut déterminer via une représentation cartographique. Les objets physiques disponibles dans cette zone sont déterminés automatiquement et l'application logicielle peut s'interfacer avec ces objets physiques (ou une partie d'entre eux) pour rendre possible le déclenchement de l'application logicielle.

L'invention, ses caractéristiques et ses avantages apparaîtront de façon plus claire dans la description qui va suivre en liaison avec les figures annexées.
La figure 1 illustre un enchaînement possible des étapes du procédé selon l'invention.
La figure 2 représente schématiquement une architecture générale dans laquelle l'invention est susceptible de s'inscrire.
Les figures 3 et 4 représentent deux exemples d'interface homme-machine pour la mise en oeuvre de l'invention.

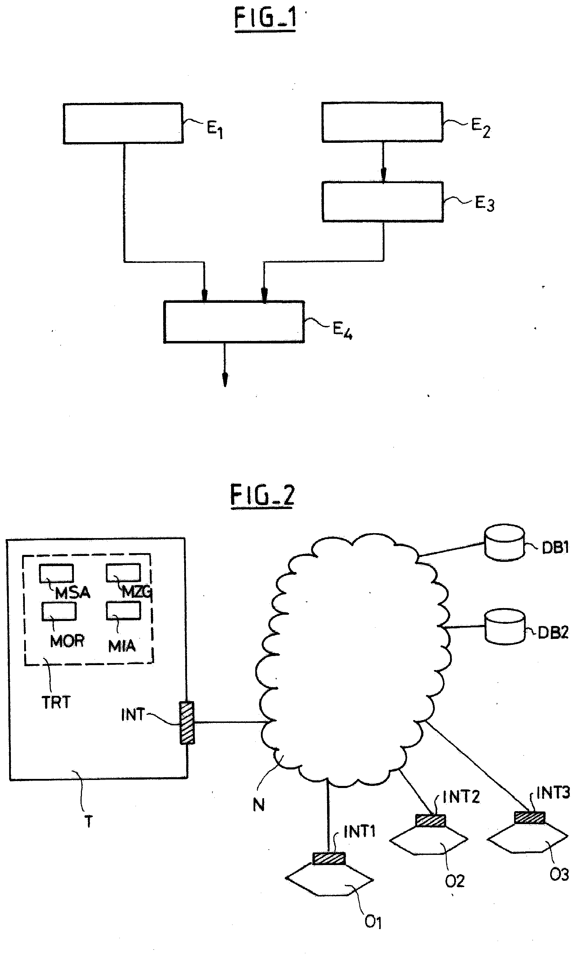

Le terminal de communication T représenté sur la figure 2 dispose de moyens de traitement TRT comportant plusieurs modules MZG, MIA, MOR, MSA. De façon classique en soi, ces moyens de traitement peuvent comprendre des circuits électroniques programmables et un système d'exploitation prévu pour mettre en oeuvre des modules logiciels constitués de codes informatiques. Les modules MSA, MZG, MOR, MSA peuvent être des modules logiciels indépendants ou être intriqués au sein d'un même module logiciel.

Le terminal de communication T dispose en outre d'une interface INT lui permettant de communiquer avec un réseau de communication N. Le terminal de communication peut être un terminal mobile et l'interface de communication INT peut alors être une interface radio (Wifi, 3G, LTE, etc.)

Le réseau de communication N est classiquement un réseau composite. Il peut comporter un réseau d'accès radio (Wifi, 2G, 3G, LTE...), un réseau privé filaire, un réseau public etc. L'invention est susceptible de s'appliquer indépendamment de l'architecture du réseau de communication et des technologies utilisés.

Au réseau de communication N sont connectés des objets physiques O1, O2, 03, disposant d'une interface appropriée, respectivement Int1, Int2, Int3, leur permettant de communiquer avec ce réseau N. Cette communication peut éventuellement se faire via un dispositif d'adaptation qui peut être embarqué dans l'objet réel lui-même ou bien former une passerelle entre des objets physiques et le réseau de communication.

Ces objets physiques peuvent être de différentes natures. Il peut s'agir d'objets physiques disponibles dans un domicile privé, dans un espace de travail (bureau, usine, atelier...), dans un espace public (rue, salle de restaurant, bar, hôtel...), etc.

Dans un intérieur de bâtiment, il peut s'agir par exemple d'une lampe, d'un écran de télévision, d'un téléphone, d'un haut-parleur, d'un cadre numérique, d'un lecteur de média (DVD..), d'une radio, d'une pendule etc. Dans un environnant extérieur, il peut s'agir d'indicateurs de signalisation (feux tricolores, panneaux lumineux), de dispositifs publicitaires, d'écran d'affichage d'information, etc.

Ces objets physiques peuvent disposer d'une interface avec le réseau de télécommunication N.

Certains objets physiques sont des objets complexes offrant plusieurs services (ou fonctionnalités) via son interface avec le réseau de communication N. Une télévision peut offrir par exemple un très large panel de services via son interface permettant notamment de la commander entièrement à distance : changement de canal, paramétrage de la luminosité, du contraste, réglage du volume, choix d'un traitement d'amélioration de la vidéo ou du son, etc.

D'autres objets physiques sont beaucoup plus simples et n'offrent que des services moins nombreux. Par exemple, une lampe peut n'offrir qu'une interface permettant de l'allumer ou de l'éteindre.

### Sélection d'une application

Le procédé selon l'invention comporte une étape, E1 sur la figure 1, consistant à sélectionner une application parmi un ensemble d'applications logicielles disponibles. Cette étape peut être mise en oeuvre par un module MSA des moyens de traitement TRT.

Ces applications logicielles disponibles peuvent être embarquées dans le terminal de communication ou hébergés sur un serveur distant. Afin d'embarquer et de mettre en oeuvre des applications logicielles, le terminal de communication peut comporter un système d'exploitation permettant de télécharger et de lancer de telles applications, tel les systèmes iOS de la société Apple, Android, ou Badu de la société Samsung.

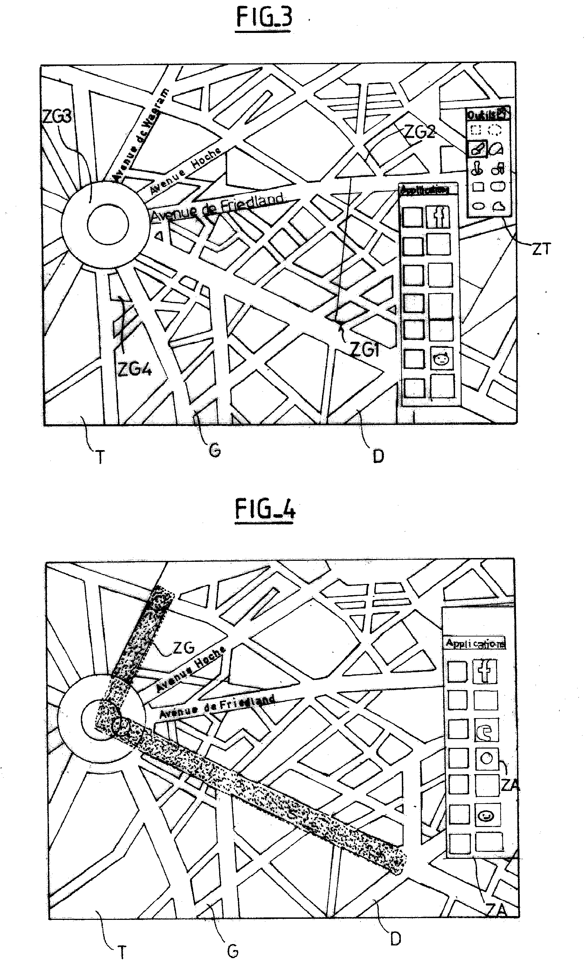

La figure 3 illustre une interface homme-machine possible pour mettre en oeuvre l'invention. Le terminal de communication T dispose d'un écran D permettant d'afficher une représentation géographique G (qui sera expliquée plus loin) et un ensemble d'outils. Certains de ces outils peuvent être organisés sous forme de menus fixes ou flottants, etc. de façon connue en soi.

Certains de ces outils sont prévus pour la sélection d'une application logicielle. Ils peuvent être regroupés sous la forme d'une barre d'outils spécifique ZA, dans laquelle chaque icône correspond à une application. Cette barre d'outils forme des moyens de commandes permettant à l'utilisateur du terminal de communication T de simplement sélectionner une application parmi celles proposées en cliquant sur l'icône correspondante.

Les applications logicielles peuvent être les applications logicielles embarquées dans le terminal de communication T, mais elles peuvent également comprendre des applications disponibles via le réseau de communication T. Une fois sélectionnée, l'application peut alors être téléchargée et installée sur le terminal de communication. D'autres types d'applications peuvent ne pas nécessiter un téléchargement et être accessibles à distance (applications web, applications en langage Ajax, etc.)

Les applications disponibles peuvent être référencées dans une base de données DB2 accessibles via le réseau de communication T. Les applications embarquées peuvent être référencés dans une base interne au terminal de communication d'une façon connue en soi et dépendante du système d'exploitation utilisé.

### Délimitation d'au moins une zone géographique

L'invention comporte également une étape E2 de délimitation d'au moins une zone géographique sur la représentation graphique G affichée sur l'écran D du terminal de communication T. Cette étape peut être mise en oeuvre par un module MZG des moyens de traitement TRT.

Cette étape E2 peut être effectuée à la suite de l'étape E1 de sélection d'une application, mais elle peut également être effectuée avant. Pour cette raison, il a été choisi de représenter ces deux étapes E1 et E2 sur deux branches de la représentation algorithmique de la figure 1.

La représentation cartographique G correspond à une zone géographique réelle. Elle peut être déterminée par l'utilisateur lui-même (qui peut indiquer le nom d'une ville, une position GPS etc.), par géolocalisation du terminal mobile ou par tout autre moyen. La détermination et l'affichage de la représentation cartographique G sont des conditions pré-requises qui n'entrent pas dans l'objet de la présente invention.

Au moyen de l'interface homme-machine, l'utilisateur peut délimiter une ou plusieurs zones géographiques.

Cette délimitation peut être effectuée comme avec un logiciel de dessin : il peut tracer à la souris une forme géométrique, par exemple en sélectionnant au préalable un type de formes géométriques dans un menu ou barre d'outils ZT. Cette barre d'outils ZT forme des moyens de commandes pour notamment choisir un type de forme parmi un ensemble de types proposés : rectangle, cercle, polygones... Une fois le type sélectionné, l'utilisateur peut tracer la forme voulue à l'endroit voulue sur la représentation cartographique G.

La figure 3 montre plusieurs exemples de telles formes. Les zones géographiques ZG1 et ZG2 sont de forme triangulaire, tandis que la zone géographique est de forme annulaire. La zone géographique ZG4 est de type polygonal. Il est également possible de prévoir des mécanismes d'aide avancés. Par exemple, la zone géographique ZG4 peut être produite par un mécanisme d'analyse d'image qui isole un bloc d'habitations en détectant les contours des rues : l'utilisateur peut choisir cet outil par la barre d'outils ZT puis pointer un point de la carte et les moyens de TRT détermineront automatiquement le bloc auquel appartient le point en question et ainsi la zone géographique ZG4.

Il est également possible de lier des zones géographiques ainsi qu'il a été fait pour les zones géographiques ZG1 et ZG2. Pour ce faire, l'utilisateur choisit l'outil idoine dans la barre d'outils ZT et pointe les deux zones ou bien trace une ligne entre les deux zones.

L'impact d'une liaison dépend de l'application logicielle sélectionnée lors de l'étape E1.

### Détermination automatique des objets physiques actifs dans la zone

L'invention comporte ensuite une étape E3 de détermination automatique d'un ensemble d'objets physiques actifs situés dans la ou les zones géographiques précédemment délimitées et disposant d'une interface avec le réseau de communication N. Cette étape peut être mise en oeuvre par un module MOR des moyens de traitement TRT.

On appelle ici objet physique « actif » un objet physique à même de communiquer effectivement avec le réseau de communication N. Certains objets nécessitent pour ce faire d'être alimentés, allumés et/ou configurés convenablement.

Il peut être prévu d'afficher les objets physiques actifs sur la représentation cartographique G. Cette affichage peut être subordonnée au nombre d'objets physiques actifs déterminés.

Afin de déterminer les objets physiques actifs présents, plusieurs mises en oeuvre sont possibles.

Une base de données DB1 peut être fournie pour référencer les objets physiques disponibles. Cette base de données peut associer les objets physiques et leur position géographique. Elle peut par exemple contenir des enregistrements associant les identifiants des objets physiques avec des caractéristiques (types, capacités offertes...), des états (actifs/ non-actifs) et ces positions géographiques.

La position géographique peut consister en un couple longitude / latitude. Elle peut également comprendre une altitude.

Il est alors possible de déterminer l'ensemble des objets physiques actifs en transmettant à cette base de données DB1 une requête contenant les caractéristiques de la (ou des) zone géographique(s) délimitée(s). Un moteur de recherche peut par exemple comparer les positions géographiques des objets physiques présents dans la base de données DB1 et celles de la zone géographique.

### Interfaçage

L'invention comporte également une quatrième étape E4 d'interfaçage de l'application sélectionnée avec un sous-ensemble d'objets physiques parmi l'ensemble d'objets physiques déterminé à l'étape E3. Cette étape peut être partiellement mise en oeuvre par un module d'interfaçage d'applications MIA des moyens de traitement TRT du terminal de communication T.

Cet interfaçage permet alors de déclencher l'application sélectionnée en lui permettant d'utiliser les objets physiques. Elle peut n'utiliser qu'un sous-ensemble des objets physiques présents ; ce sous-ensemble peut éventuellement être réduit à un singleton.

Ce sous-ensemble peut être déterminé dynamiquement par la localisation géographique du terminal mobile. Autrement dit, les moyens de traitement peuvent mettre en oeuvre un processus fonctionnant en arrière-plan qui permet de rafraichir ce sous-ensemble en fonction de la position du terminal de communication. Ainsi, lorsque l'utilisateur se déplace, les objets physiques actifs disponibles peuvent changer et l'application logicielle sélectionnée peut être amenée à utiliser un sous-ensemble différent.

Avant le déclenchement de l'application proprement dit, l'invention peut comporter une étape de vérification que l'application peut effectivement être déployée sur le sous-ensemble d'objets physiques.

En effet, les applications peuvent nécessiter des requis. Ces requis peuvent être des points d'interface d'entrée qui nécessitent un flux d'information entrant, et des points d'interface de sortie qui nécessitent de pouvoir émettre un flux d'information sortant. Alternativement, ces requis peuvent être des types d'objets physiques devant nécessairement (ou éventuellement optionnellement) être présents pour mettre en oeuvre l'application.

La base de donnée D2 peut associer des références des applications aux requis, par exemple sous la forme d'une description qui peut être conforme au langage XML (Extensible Markup Language) comme dans l'exemple simplifié ci-dessous :

```
 <application id="blinkcall">
     <attrs>
        <attr name="state"> <value>disable</value></attr>
        <attr name="configured"><value>no</value></attr>
        <attr name="name"><value> blinkcall Application</value></attr>
     <attr name="image"><value>appli_ bkinkcall.png</value></attr>
     <attr name="description"><value>The blinkcall Application allows you to
     prompt on a screen the caller name and to blink a lamp when your phone
     rings</value></attr>
     <attr name="creator"><value>Monique</value></attr>
     <attr name="rate"><value>4,5</value></attr>
     <attr name="price"><value>2$</value></attr>
     <attr name="nbvo"><value>3</value></attr>
     <attr name="vo_1_kind"><value>
       <div class="rwobject"><span class ="kind">phone</span></div>
       </value> </attr>
    <attr name="vo_2_kind"><value>
       <div class="rwobject"><span class ="kind">lamp</span></div>
       </value> </attr>
    <attr name="vo_3_kind"><value>
       <div class="rwobject"><span class ="kind">screen</span></div>
       </value></attr>
     </attrs>
 </application>
```

Cet exemple est une description d'une application nommée « blinkcall» qui permet, à la réception d'un appel téléphonique entrant, de faire clignoter une lampe et d'afficher le nom de l'appelant sur un écran.

Cette application met donc en jeu trois objets physiques ainsi qu'indiqué dans les trois derniers attributs <attr> : un téléphone (« phone »), une lampe (« lamp ») et un écran (« screen »). Les attributs précédents donnent d'autres informations comme le nom de l'application, le nom de son créateur, une image et une description (destinés à être affiché sur l'écran du terminal T), son prix etc.

Le module d'interfaçage d'applications MIA peut utiliser ces descriptions afin de vérifier si l'application sélectionnée peut s'interfacer effectivement dans la zone géographique délimitée. Concrètement, il s'agit de rechercher les objets physiques actifs disponibles dans cette zone permettant de répondre aux requis indiqués dans la description de l'application.

Si tel n'est pas le cas, l'utilisateur peut être informé et il peut lui être proposé de choisir une autre zone géographique, notamment d'élargir ces dimensions afin d'inclure davantage d'objets physiques.

Il peut également lui être indique quel type d'objet physique est manquant afin qu'il puisse, le cas échéant, y suppléer.

Il peut également lui être proposé de déclencher quand-même l'application qui pourra alors fonctionner en mode dégradé.

Selon un mode particulier de réalisation, cette vérification peut être effectuée pendant l'étape E2 de délimitation d'une zone géographique en temps réel. Pendant que l'utilisateur trace la forme de la zone géographique sur la représentation cartographique G, la vérification est effectuée dynamiquement et un affichage permet à l'utilisateur de savoir si la zone en cours permet de déployer ou non l'application sélectionnée. Cet affichage peut être un indicateur graphique quelconque. Il peut être possible par exemple de faire varier la couleur de la zone géographique en cours de tracé en fonction de cette vérification. Cette mode de réalisation permet de guider l'utilisateur pour délimiter une zone géographique optimale, ce qui peut être un critère important dans certains contextes.

Le déclenchement proprement dit peut être fait immédiatement après l'interfaçage ou bien reporté à l'apparition d'un événement. Cet événement peut notamment être lié à la géo-localisation du terminal de communication T et de sa comparaison avec la ou les zones géographiques. Par exemple, lorsque le terminal de communication T entre dans la zone géographique préalablement délimitée, un événement est provoqué et les applications logicielles liés à cette zone géographique sont déclenchés en utilisant les objets physiques (soit préalablement déterminés, soit dynamiquement déterminés à ce moment-là.)

Le choix du moment de déclenchement peut dépendre du choix de l'utilisateur mais aussi de la nature de l'application logicielle.

Comme on l'a évoqué précédemment, les étapes du procédé selon l'invention peuvent être ordonnées de différentes façons.

Ainsi, il est possible pour l'utilisateur de d'abord sélectionner une application puis de délimiter une zone géographique ; ou bien au contraire de d'abord délimiter une zone géographique puis de sélectionner une application logicielle.

Il est à noter que le choix d'une ou l'autre des possibilités peut être laissé à l'utilisateur ou bien être imposé.

Ce choix peut également avoir des conséquences techniques.

Par exemple, la délimitation d'une zone géographique peut déclencher immédiatement l'étape suivante de détermination automatique d'un ensemble d'objets physiques actifs situés dans la zone géographique et disposant d'une interface avec le réseau de communication. En fonction de l'ensemble d'objets physiques actifs ainsi déterminé, il est possible de ne présenter à l'utilisateur que la partie des applications logicielles disponibles. Cette mise en oeuvre présente donc un avantage technique supplémentaire qui peut être intéressant.

### Utilisations

L'invention peut être utilisée dans différents contextes.

Une première mise en oeuvre peut concerner un gestionnaire d'une flotte de véhicules d'intervention. Il peut par exemple s'agir d'un gestionnaire d'un centre de pompiers.

Il choisit sur son terminal de communication T l'application de gestion de flotte, puis créé une zone géographique. Cette zone géographique peut être un trajet ZG comme sur l'exemple de la figure 4, qui mène de la station de pompiers jusqu'au site d'intervention. Un paramètre peut être ajouté contenant les identifiants des véhicules qui vont être déployés sur le site.

Lorsque les véhicules sont dans la zone ZG, en fonction de la localisation, l'application va s'interfacer avec les objets physiques « signaux de circulation » afin de les faire basculer au vert devant la flotte.

L'application peut en outre indiquer la progression de la flotte, l'état des signaux de circulation, et faire évoluer la zone géographique ZG dynamiquement en fonction de l'avancement de la flotte.

Une autre mise en oeuvre peut concerner la gestion d'infrastructure, par exemple des infrastructures de la voirie ou des infrastructures industrielles sur un site de vaste dimension etc.

Le gestionnaire peut sélectionner une application de surveillance et tracer une zone correspondant à une zone à surveiller. L'application va automatiquement s'interfacer avec les objets physiques présents dans cette zone et procéder à un ensemble de tests. Les objets physiques ayant faillis à ces tests pourront alors être signalés au gestionnaire via l'interface homme-machine. Il peut alors déclencher une seconde application sur des sous-zones des zones géographiques afin d'y déployer des techniciens. Cette seconde application permet d'aider les techniciens à remplacer les matériels défaillants et le gestionnaire à visualiser l'état d'avancement de ces réparations.

Une troisième mise en oeuvre peut permettre d'exploiter la possibilité de lier deux zones géographiques ZG1, ZG2 ainsi qu'évoqué précédemment. L'utilisateur créé deux zones ZG1 et ZG2 disjointes et les relie. Ces zones géographiques peuvent par exemple correspondre à deux endroits habituels de son rythme de vie : son domicile et son lieu de travail par exemple. Le lien entre les deux zones permet d'indiquer que l'application sélectionnée doit créer une même session applicative pour les deux zones ou bien créer un lien logique applicatif entre ces deux zones.

Il peut par exemple s'agir d'une application de téléphonie : lorsque son enfant entre à la maison (zone ZG1), l'application déclenche automatiquement un appel téléphonique entre la maison et le lieu de travail (zone ZG2) de l'utilisateur. Le fait de préciser des zones (plutôt que des objets physiques particuliers) permet de reporter le choix de l'objet physique au moment du déclenchement de l'appel : l'application recherchera à ce moment-là quel est l'objet physique actif permettant de réaliser l'appel : téléphone mobile, téléviseur avec capacités de télécommunication s'il est allumé, etc.

Une quatrième mise en oeuvre consiste à délimiter une zone de transport écologique ou préférentiel. L'utilisateur souhaite utiliser un mode de transport et il trace une zone autour de ce mode de transport (zone ZG sur la figure 4 par exemple). Il sélectionne une application liée à ce transport et l'associe avec cette zone ZG.

Lorsque ses pérégrinations l'amènent à croiser cette zone géographique ZG, automatiquement l'application sélectionnée est déclenchée et peut lui proposer les horaires des prochains transports sur cette ligne.

Les mises en oeuvre possibles de l'invention sont nombreuses, car le mécanisme sous-jacent de l'invention consistant à « dessiner » une zone d'influence d'une application sur une carte est nouveau et en totale rupture avec les habitudes. Elle ouvre donc la porte à un vaste champ d'applications possibles.

## Revendications

1. Procédé pour déclencher une application logicielle accessible depuis un terminal mobile connecté à un réseau de communication et utilisant au moins un objet physique, comportant :
- une étape (E1) de sélection d'une application parmi un ensemble d'applications disponibles,
- une étape (E2) de délimitation sur un écran du terminal mobile d'au moins une zone géographique sur une représentation cartographique, par l'utilisateur dudit terminal mobile, ladite au moins une zone étant formée de deux zones géographiques disjointes, ladite application déployant une même session applicative dans les deux zones géographiques,
- une étape d'accès à une description de l'application sélectionnée, la description comprenant des requis de ladite application,
- une étape (E3) de détermination automatique d'un ensemble d'objets physiques actifs situés dans ladite au moins une zone géographique et disposant d'une interface avec ledit réseau de communication, la détermination automatique comprenant une comparaison des positions géographiques des objets physiques actifs référencés dans une base de données avec des caractéristiques de la au moins une zone géographique,
- une étape de recherche d'un sous-ensemble des objets physiques actifs parmi ledit ensemble d'objets physiques actifs, les objets physiques du sous-ensemble répondant à au moins un requis indiqué dans la description de ladite application,
- une étape (E4) d'interfaçage de ladite application avec le sous-ensemble d'objets physiques,
dans lequel le terminal informe l'utilisateur si le sous-ensemble d'objets physiques ne répond pas à tous les requis présents dans la description de l'application et dans lequel le terminal propose de choisir une autre zone géographique en réponse à la détection de ce que le sous-ensemble d'objets physiques ne répond pas à tous les requis présents dans la description de l'application.

2. Procédé selon la revendication précédente dans lequel ledit sous-ensemble est déterminé dynamiquement à partir dudit ensemble d'objets physiques actifs et de la localisation géographique dudit terminal mobile.

3. Procédé selon l'une des revendications précédentes dans lequel ladite au moins une zone géographique comprends un trajet.

4. Procédé selon l'une des revendications précédentes, dans lequel ladite détermination automatique d'un ensemble d'objets physiques est effectuée dynamiquement en même temps que ladite délimitation d'au moins une zone géographique.

5. Procédé selon l'une des revendications précédentes, dans lequel la description de l'application est stockée dans une seconde base de données.

6. Procédé selon l'une des revendications précédentes, dans lequel le terminal propose d'élargir la zone géographique en réponse à la détection de ce que le sous-ensemble d'objets physiques ne répond pas à tous les requis présents dans la description de l'application.

7. Procédé selon l'une des revendications précédentes, dans lequel le terminal indique un type d'objet physique manquant en réponse à la détection de ce que le sous-ensemble d'objets physiques ne répond pas à tous les requis présents dans la description de l'application.

8. Procédé selon l'une des revendications précédentes, dans lequel le terminal propose un fonctionnement de l'application en mode dégradé en réponse à la détection de ce que le sous-ensemble d'objets physiques ne répond pas à tous les requis présents dans la description de l'application.

9. Terminal de communication disposant d'une interface homme-machine comportant un écran (D) permettant l'affichage d'une représentation cartographique (G), de premiers moyens de commandes (ZA) pour la sélection d'une application parmi un ensemble d'applications disponibles, et de seconds moyens de commande (ZT) pour délimiter sur l'écran du terminal au moins une zone géographique (ZG1, ZG2) sur ladite représentation cartographique, ladite au moins une zone géographique étant formée de deux zones géographiques disjointes, ladite application déployant une même session applicative dans les deux zones géographiques, des moyens pour obtenir une description de l'application sélectionnée, la description comprenant des requis de ladite application, des moyens de traitement (TRT) pour déterminer automatiquement un ensemble d'objets physiques actifs situés dans ladite au moins une zone géographique et disposant d'une interface avec un réseau de communication (N), la détermination automatique comprenant une comparaison des positions géographiques des objets physiques actifs présent dans une base de données avec des caractéristiques de la au moins une zone géographique, des moyens de sélection pour rechercher un sous-ensemble des objets physiques actifs parmi ledit ensemble d'objets physiques actifs, les objets physiques du sous-ensemble répondant à au moins un requis indiqué dans la description de ladite application, et pour interfacer ladite application avec le sous-ensemble d'objets physiques et dans lequel le terminal est configuré pour informer l'utilisateur si le sous-ensemble d'objets physiques ne répond pas à tous les requis présents dans la description de l'application et dans lequel le terminal est configuré pour proposer de choisir une autre zone géographique en réponse à la détection de ce que le sous-ensemble d'objets physiques ne répond pas à tous les requis présents dans la description de l'application..

10. Programme d'ordinateur disposant de moyens de code prévus pour mettre en oeuvre le procédé selon l'une des revendications 1 à 8 lorsqu'il est déployé sur un terminal de communication.

## Patentansprüche

1. Verfahren zum Auslösen einer Software-Anwendung, zugänglich über ein mobiles Endgerät, das mit einem Kommunikationsnetzwerk verbunden ist, und unter Verwendung von mindestens einem physischen Objekt, umfassend:
- einen Schritt (E1) des Auswählens einer Anwendung aus einer Gruppe von verfügbaren Anwendungen,
- einen Schritt (E2) des Beschränkens auf einen Bildschirm des mobilen Endgerätes von mindestens einem geografischen Bereich in einer kartografischen Darstellung durch den Benutzer des besagten mobilen Endgeräts, wobei der mindestens eine besagte Bereich aus zwei getrennten geografischen Bereichen besteht und wobei besagte Anwendung die gleiche Anwendungssitzung in den beiden geografischen Bereichen einsetzt,
- einen Schritt des Zugreifens auf eine Beschreibung der gewählten Anwendung, wobei die Beschreibung die Voraussetzungen der besagten Anwendung umfasst,
- einen Schritt (E3) des automatischen Bestimmens einer Gruppe von aktiven physischen Objekten, befindlich in dem besagten mindestens einem geografischen Bereich und unter Verfügung einer Schnittstelle mit besagtem Kommunikationsnetzwerk, wobei das automatische Bestimmen einen Vergleich der geografischen Positionen von in einer Datenbank erfassten aktiven physischen Objekten mit den Eigenschaften von mindestens einem geografischen Bereich umfasst,
- einen Schritt des Suchens einer Untergruppe von aktiven physischen Objekten in besagter Gruppe von aktiven physischen Objekten, wobei die physischen Objekte der Untergruppe mindestens eine in der Beschreibung der besagten Anwendung angegebenen Voraussetzung erfüllen,
- einen Schritt (E4) des Verbindens von besagter Anwendung mit der Untergruppe der physischen Objekte,
wobei das Endgerät den Benutzer informiert, wenn die Untergruppe der physischen Objekte nicht alle in der Beschreibung der Anwendung vorhandenen Voraussetzungen erfüllt und wobei das Endgerät vorschlägt, einen anderen geografischen Bereich auszuwählen, als Reaktion auf die Feststellung, das die Untergruppe der physischen Objekte nicht alle in der Beschreibung der Anwendung vorhandenen Voraussetzungen erfüllt.

2. Verfahren nach dem vorhergehenden Anspruch, wobei besagte Untergruppe dynamisch bestimmt wird, auf Grundlage besagter Gruppe der aktiven physischen Objekte und der geografischen Lage des besagten mobilen Endgeräts.

3. Verfahren nach einem der vorhergehenden Ansprüche, wobei der mindestens eine besagte geografische Bereich eine Strecke umfasst.

4. Verfahren nach einem der vorhergehenden Ansprüche, wobei besagtes automatisches Bestimmen einer Gruppe von physischen Objekten dynamisch und gleichzeitig mit der besagten Begrenzung auf mindestens einen geografischen Bereich erfolgt.

5. Verfahren nach einem der vorhergehenden Ansprüche, wobei die Beschreibung der Anwendung in einer zweiten Datenbank gespeichert ist.

6. Verfahren nach einem der vorhergehenden Ansprüche, wobei das Endgerät vorschlägt, den geografischen Bereich auszuweiten, als Reaktion auf die Feststellung, dass die Untergruppe der physischen Objekte nicht alle in der Beschreibung der Anwendung vorhandenen Voraussetzungen erfüllt.

7. Verfahren nach einem der vorhergehenden Ansprüche, wobei das Endgerät einen fehlenden physischen Objekttyp anzeigt, als Reaktion auf die Feststellung, dass die Untergruppe der physischen Objekte nicht alle in der Beschreibung der Anwendung vorhandenen Voraussetzungen erfüllt.

8. Verfahren nach einem der vorhergehenden Ansprüche, wobei das Endgerät einen Betrieb der Anwendung in einem eingeschränkten Modus vorschlägt, als Reaktion auf die Feststellung, dass die Untergruppe der physischen Objekte nicht alle in der Beschreibung der Anwendung vorhandenen Voraussetzungen erfüllt.

9. Kommunikationsendgerät, unter Verfügung einer Mensch-Maschine-Schnittstelle, umfassend einen Bildschirm (D) zum Anzeigen einer kartografischen Darstellung (G), mit ersten Befehlsmitteln (ZA) zum Auswählen einer Anwendung aus einer Gruppe von verfügbaren Anwendungen und mit zweiten Befehlsmitteln (ZT) zum Beschränken auf den Bildschirm des Endgeräts von mindestens einem geografischen Bereich (ZG1, ZG2) in besagter kartografischer Darstellung, wobei der mindestens eine geografische Bereich aus zwei getrennten geografischen Bereichen besteht und wobei besagte Anwendung eine gleiche Anwendungssitzung in den beiden geografischen Bereichen einsetzt, sowie Mittel zum Erhalten einer Beschreibung der ausgewählten Anwendung, wobei die Beschreibung die Anforderungen der besagten Anwendung umfasst, sowie Verarbeitungsmittel (TRT) zum automatischen Bestimmen einer Gruppe von aktiven physischen Objekten, befindlich in dem besagten mindestens einem geografischen Bereich und unter Verfügung einer Schnittstelle mit einem Kommunikationsnetzwerk (N), wobei das automatische Bestimmen einen Vergleich der geografischen Positionen von in einer Datenbank erfassten aktiven physischen Objekten mit den Eigenschaften von mindestens einem geografischen Bereich umfasst, sowie Auswahlmittel zum Suchen einer Untergruppe von aktiven physischen Objekten in besagter Gruppe von aktiven physischen Objekten, wobei die physischen Objekte der Untergruppe mindestens eine in der Beschreibung der besagten Anwendung vorhandene Voraussetzung erfüllen, und zum Verbinden der besagten Anwendung mit der Untergruppe der physischen Objekte, wobei das Endgerät konfiguriert ist, um den Benutzer zu informieren, wenn die Untergruppe der physischen Objekte nicht alle in der Beschreibung der Anwendung vorhandenen Voraussetzungen erfüllt und wobei das Endgerät konfiguriert ist, um vorzuschlagen, einen anderen geografischen Bereich auszuwählen, als Reaktion auf die Feststellung, dass die Untergruppe der physischen Objekte nicht alle in der Beschreibung der Anwendung vorhandenen Voraussetzungen erfüllt.

10. Computerprogramm, das über die vorgesehenen Code-Mittel verfügt, um das Verfahren nach einem der Ansprüche 1 bis 8 durchzuführen, wenn es auf einem Kommunikationsendgerät eingesetzt wird.

## Claims

1. A method for triggering a software application accessible from a mobile terminal connected to a communication network and using at least one physical object, comprising:
- a step (E1) of selecting an application from a set of available applications,
- a step (E2) of delimiting on a screen of the mobile terminal, at least one geographical area on a cartographical depiction, by the user of said mobile terminal, said at least one area being formed of two separate geographical areas, said application deploying a single application session in both geographical areas,
- a step of accessing a description of the selected application, the description comprising the requirements of said application,
- a step (E3) of automatically determining a set of active physical objects located in said at least one geographical area and having an interface with said communication network, the automatic determination comprising a comparison of the geographic positions of the active physical objects referenced in a database with the characteristics of the at least one geographical area,
- a step of searching for a subset of active physical objects from among said set of active physical objects, the physical objects of the subset fulfilling at least one requirement indicated in the description of said application,
- a step (E4) of interfacing said application with the subset of physical objects,
wherein the terminal informs the user if the subset of physical objects does not fulfill all of the requirements present in the description of the application, and wherein the terminal proposes choosing another geographical area in response to the detection that the subset of physical objects does not fulfill all of the requirements present in the description of the application.

2. A method according to the preceding claim, wherein said subset is determined dynamically based on said set of active physical objects and on the geographical location of said mobile terminal.

3. A method according to the preceding claim, wherein said at least one geographical area comprises a route.

4. A method according to one of the preceding claims, wherein said automatic determination of a set of physical objects is performed dynamically at the same time as said delimiting of at least one geographical area.

5. A method according to one of the preceding claims, wherein the description of the application is stored in a second database.

6. A method according to one of the preceding claims, wherein the terminal proposes to expand the geographical area in response to the detection that the subset of physical objects does not fulfill all of the requirements present in the description of the application.

7. A method according to one of the preceding claims, wherein the terminal indicates a type of missing physical object in response to the detection that the subset of physical objects does not fulfill all of the requirements present in the description of the application.

8. A method according to one of the preceding claims, wherein the terminal proposes an operation of the application in safe mode in response to the detection that the subset of physical objects does not fulfill all of the requirements present in the description of the application.

9. A communication terminal having a human-machine interface comprising a screen (D) enabling the displaying of a cartographical depiction (G), first control means (ZA) for selecting an application from among a set of available applications, and second control means (ZT) for delimiting on the screen of the terminal at least one geographical area (ZG1, ZG2) on said cartographical depiction, said at least one geographical area being formed of two separate geographical areas, said application deploying a single application session in both geographical areas, means for obtaining a description of the selected application, the description comprising requirements of said application, processing means (TRT) for automatically determining a set of active physical objects located in said at least one geographical area and having an interface with a communication network (N), the automatic determination comprising a comparison of the geographical positions of the active physical objects present in a database with characteristics of the or at least one geographical area, selection means for searching for a subset of active physical objects from among said set of active physical objects, the physical objects of the subset fulfilling at least one requirement indicated in the description of said application, and to interface said application with the subset of physical objects, and wherein the terminal is configured to inform the user if the subset of physical objects does not fulfill all of the requirements present in the description of the application and wherein the terminal is configured to offer to choose another geographical area in response to the detection that the subset of physical objects does not fulfill all of the requirements present in the description of the application.

10. A computer program having code means provided to implement the method according to one of the claims 1 to 8, when it is deployed on a communication terminal.
